(19) Europäisches Patentamt
European Patent Office
Office européen des brevets

(11) **EP 3 825 943 A1**

(12) **EUROPEAN PATENT APPLICATION**
published in accordance with Art. 153(4) EPC

(43) Date of publication:
**26.05.2021 Bulletin 2021/21**

(51) Int Cl.:
***G06Q 30/02*** (2012.01)

(21) Application number: **19837849.9**

(22) Date of filing: **18.07.2019**

(86) International application number:
**PCT/KR2019/008863**

(87) International publication number:
**WO 2020/017897 (23.01.2020 Gazette 2020/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **19.07.2018 KR 20180083763**

(71) Applicant: **Allwinware Co., Ltd**
**Seoul 04513 (KR)**

(72) Inventor: **LEE, Jeong-Gab**
**Seoul 06288 (KR)**

(74) Representative: **Beyer, Andreas**
**Wuesthoff & Wuesthoff**
**Patentanwälte PartG mbB**
**Schweigerstrasse 2**
**81541 München (DE)**

(54) **METHOD AND DEVICE FOR DYNAMICALLY DETERMINING PRICE OF ITEM**

(57) The present invention relates to a method and device for dynamically determining the price of an item, which uses a target volume per period at a specific point in time and a sales index at the specific point in time in order to determine the selling price of a specific item at a next point in time. The method and device for dynamically determining the price of an item, according to one embodiment of the present invention, dynamically determines the price of the item by considering the target volume per period at the specific point in time and the sales index at the specific point in time together and can, thereby, reflect a current consumer demand state, while reducing the inventory-to-sales ratio of a product for sale.

Fig. 1

EP 3 825 943 A1

## Description

CROSS-REFERENCE TO RELATED APPLICATIONS

This application is a National Phase Application of PCT International Application No. PCT/KR2019/008863, which was filed on July 18, 2019, and which claims priority from Korean Patent Application No. 10-2018-0083763 filed on July 19, 2018. The disclosures of the above patent applications are incorporated herein by reference in their entirety.

BACKGROUND

1. Technical Field

The present invention relates to a method and device for dynamically determining the price of an item, more particularly to a method and device for dynamically pricing an item that use a periodic target amount at a particular time point and a sales index of the particular time point to determine the sales price of a particular item for a subsequent time point.

2. Description of the Related Art

Due to advances in communication and network technology, including the Internet, etc., online electronic transactions are being widely used for purchasing products online or booking or purchasing tickets for airlines, sporting events, movies, plays, musicals, travel, etc. In an online electronic transaction, each consumer (a wireless or wired client) may use a wired network such as the Internet, etc., and/or a wireless network such as a wireless communications network, etc.
In a conventional ticket reservation system, a user may use an information terminal capable of accessing the Internet, such as a computer, to access one of multiple ticket reservation servers over the Internet. If the user wishes to buy a ticket for entering and using a cultural, sports, or entertainment facility for example, such a server may be a ticket reservation server that cooperates with a government-authorized ticket sales network system.
The user may access an Internet reservation website using an information terminal and input the conditions for a ticket purchase.
Then, the ticket reservation server may perform a search according to the purchase conditions inputted by the user to find whether or not a ticket desired by the user is available and may determine whether or not there is a ticket that matches the purchase conditions of the user.
If there is a ticket available that matches the purchase conditions of the user, the user may request a reservation or a purchase of the ticket. However, if there is no ticket available that matches the purchase conditions of the user, the process may be concluded.
However, in the sales method of the conventional online ticket reservation website described above, the price of the ticket is decided wholly by the supplier and is set commonly regardless of the popularity of the ticket, the percentage of vacancy, the quality of the performance, the performance date, time, seating position, etc., with the consumer forced to buy a ticket at a price that is decided one-sidedly. Relevant prior art documents include Korean Patent Publication No. 10-2009-0013742.
Thus, there is a need for research on a method of determining the sales price of an item dynamically in consideration of the current sales situation and the target amount at the corresponding time point.

SUMMARY OF THE INVENTION

An objective of the present invention is to provide a method and device for dynamically pricing an item that consider both a periodic target amount at a particular time point and a sales index of the particular time point to determine the price of an item dynamically.
An objective of the present invention is to provide a method and device for dynamically pricing an item that consider both an initially configured value and a sales index of a particular time point at every sales sub-period to determine the price of an item dynamically.
An embodiment of the present invention, conceived to achieve the objectives above, provides a method for dynamically pricing an item from a pricing device connected to a computer network to dynamically determine a price of the item. This method for dynamically pricing an item may include: displaying an initial value input screen for inputting initial values associated with selling a particular item at a dynamically determined price; configuring a target sales period, a target sales amount, and a starting price for the particular item by way of the initial value input screen, where the target sales period may be divided into a multiple number of sales sub-periods; configuring the unit of each sales sub-period; calculating periodic target amounts of the particular item by using the target sales period and the target sales amount, where the periodic target amounts may be mapped respectively to the sales sub-periods; operating a timer for counting time; calculating a target achievement index ($M_i$) achieved in an $i$-th sales sub-period, $i$ being a natural number, based on a price adjustment command signal generated by the timer, where the target achievement index ($M_i$) may be calculated after the end of the $i$-th sales sub-period and before the beginning of the ($i$+1)-th sales sub-period by using the periodic target amount mapped to the $i$-th sales sub-period and a cumulative net sales amount; determining an adjustment price value ($R_i$) for the $i$-th sales sub-period by using the target achievement index ($M_i$) ; and determining a sales price of the ($i$+1)-th sales sub-period by using a sales price of the $i$-th sales sub-period and the determined adjustment price value for the $i$-th sales sub-period.

An embodiment of the present invention, conceived to achieve the objectives above, provides a device connected to a computer network to dynamically determine a price of the item. This device for dynamically pricing an item from a pricing device may include: a display unit that displays an initial value input screen for inputting initial values associated with selling a particular item at a dynamically determined price; an initial value configuration unit that configures a target sales period, a target sales amount, a starting price, and the unit of sales sub-periods for the particular item by way of the initial value input screen, where the target sales period may be divided into a multiple number of sales sub-periods; a periodic target amount calculation unit that calculates periodic target amounts of the particular item by using the target sales period and the target sales amount, where the periodic target amounts may be mapped respectively to the sales sub-periods; a timer that counts time and generates a particular signal at a predetermined time point; a computation unit that calculates a target achievement index ($M_i$) achieved in an $i$-th sales sub-period, $i$ being a natural number, based on a price adjustment command signal generated by the timer and determines an adjustment price value ($R_i$) for the $i$-th sales sub-period by using the target achievement index ($M_i$), where the target achievement index ($M_i$) may be calculated after the end of the $i$-th sales sub-period and before the beginning of an ($i$+1)-th sales sub-period by using the periodic target amount mapped to the $i$-th sales sub-period and a cumulative net sales amount; a price adjustment unit that determines the sales price of the ($i$+1)-th sales sub-period by using the sales price of the $i$-th sales sub-period and the determined adjustment price value for the $i$-th sales sub-period; and a control unit that controls the display unit, the initial value configuration unit, the periodic target amount calculation unit, the computation unit, and the price adjustment unit.

A method and device for dynamically pricing an item according to an embodiment of the present invention can determine the price of an item dynamically in consideration of both the periodic target amount at a particular time point and the sales index at the particular time point, thereby incorporating the current state of consumer demands as well as reducing inventory levels of the sales product.

An embodiment of the present invention can dynamically determine the price of an item by considering both the initially configured values and the sales index at a particular time point for each sales sub-period and can thereby provide a price that is reasonable from the perspectives of both the consumer and the seller.

An embodiment of the invention can reduce the effort and cost associated with an administrator determining the sales price of each item.

BRIEF DESCRIPTION OF THE DRAWINGS

FIG. 1 is a block diagram illustrating a method for dynamically pricing an item associated with an embodiment of the present invention.

FIG. 2 is a block diagram of the pricing device illustrated in FIG. 1.

FIG. 3 is a flow diagram of a method for dynamically pricing an item associated with an embodiment of the present invention.

FIG. 4 illustrates an example of an input screen for configuring initial values in a method for dynamically pricing an item associated with an embodiment of the present invention.

FIG. 5 is a detailed flow diagram illustrating operation S360 of FIG. 3 associated with an embodiment of the present invention.

DETAILED DESCRIPTION OF THE INVENTION

In the following, a method and device for dynamically pricing an item associated with an embodiment of the present invention will be described, with reference to the accompanying drawings.

In the present specification, an expression used in the singular encompasses the expression of the plural, unless it has a clearly different meaning in the context. In the present specification, it is to be understood that terms such as "including" or "having", etc., are intended to indicate the existence of the features, numbers, steps, actions, components, parts, or combinations thereof disclosed in the specification and are not intended to preclude the possibility that one or more other features, numbers, steps, actions, components, parts, or combinations thereof may exist or may be added.

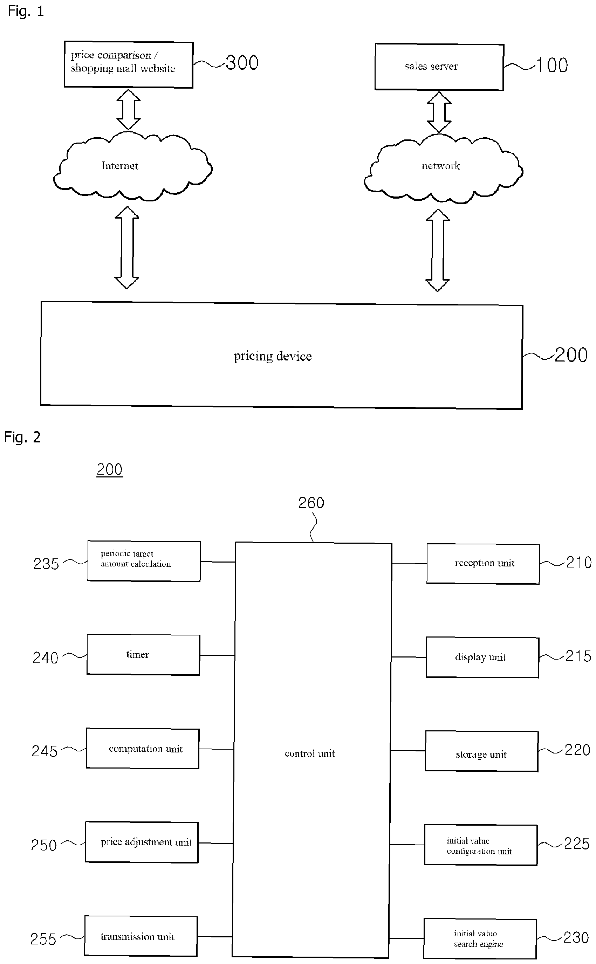

FIG. 1 is a block diagram illustrating a method for dynamically pricing an item associated with an embodiment of the present invention.

As illustrated, a pricing device 200 can be connected to a sales server 100 or a price comparison website or shopping mall website 300 over a network or the Internet. A network refers to a network that performs communication through a medium and can include at least one of a wired communication network, a computer network, and a wireless communication network.

The sales server 100 can provide a web page for buyers. For example, the sales server 100 can provide web pages for electronic transactions between buyers and sellers and can store the sales information of the particular item. The sales information of the particular item can include the sales amount of the particular item, the sales prices, detailed information of the particular item, the number of items currently available, etc. The sales server 100 can provide the buyers with a web page providing a list of products available for electronic transactions, a web page providing the detailed information of the products, and a web page for making a payment for an electronic transaction.

The sales server 100 can also provide web pages for sellers. For example, the sales server 100 can provide a web page that allows a seller to register products for selling. Buyers and sellers can transmit various request information through the web pages described above, and the sales server 100 can process such request information.

The pricing device 200 can receive sales information for a particular item from the sales server 100 and can adjust the price of the particular item at price adjustment time points based on the received sales information and a target sales index configured beforehand. This price adjustment can be performed after an $N$-th sales sub-period ends and before the $(N+1)$-th sales sub-period begins.

The pricing device 200 can access the price comparison website or shopping mall website 300 over the Internet to search and extract a current price or a normal price for the particular item.

Although the embodiment illustrated in FIG. 1 is described with the pricing device 200 referred to as being a device separate from the sales server 100, it is possible to implement the pricing device 200 and the sales server 100 as a single device.

FIG. 2 is a block diagram of the pricing device illustrated in FIG. 1.

As illustrated, the pricing device 200 can include a reception unit 210, a display unit 215, a storage unit 220, an initial value configuration unit 225, an initial value search engine 230, a periodic target amount calculation unit 235, a timer 240, a computation unit 245, a price adjustment unit 250, a transmission unit 255, and a control unit 260.

The reception unit 210 can receive the sales information of a particular item from the sales server 100 in real time or in predetermined intervals.

The display unit 215 can display an input screen for configuring the initial sales conditions of the particular item that is to be sold at a dynamically determined price. Through the input screen, a user can configure the sales initial values of the particular item that is to be sold at a dynamically determined price.

The storage unit 220 can store various information related to the dynamic price calculation of the item. For example, the storage unit 220 can store the sales information of the item received from the sales server 100. Also, the storage unit 220 can store the sales initial values configured by the user for the particular item that is to be sold at a dynamically determined price.

The initial value configuration unit 225 can configure a particular item that is to be sold at a dynamically determined price and the initial sales condition values (hereinafter referred to as 'initial values') of the particular item. The initial values can be configured by user input. The initial values can include the item that is to be sold at a dynamically determined price, the target sales period, the units of sales sub-periods, the total target amount, the starting price, the upper limit price, the lower limit price, etc. The item that is to be sold at a dynamically determined price can be selected by an input by the user. The target sales period refers to the total sales period during which the selected item is to be sold at a dynamically determined price, and the total target amount refers to the total number of items that are to be sold during the target sales period. The target sales period can be configured in units of hours, days, weeks, months, etc. The target sales period can be divided into a multiple number of sales sub-periods during which different sales prices may be applied. For example, if the target sales period is the 30 days from September 1st, 2018, to September 30th, 2018, this can be divided into six sales sub-periods of 5 days each. Also, the same fixed price can be applied during the same sales sub-period. For example, a fixed first sales price can be applied during a first sales sub-period, and a fixed second sales price can be applied during a second sales sub-period. The starting price refers to the sales price at the time point when the sales of the dynamically priced item begins or during the first sales sub-period (initial sales sub-period). The sales price for the $N$-th sales sub-period (where $N$ is a natural number) can be determined based on a sales index during the ($N$-1)-th sales sub-period after the ($N$-1)-th sales sub-period ends and before the $N$-th sales sub-period begins. The $N$-th sales price for the $N$-th sales sub-period can be determined between the upper limit price and the lower limit price.

The initial value search engine 230 can search for and extract the starting price or a basis price for determining the starting price. The initial value search engine 230 can search and extract the current price or lowest price of the particular item from the price comparison website or shopping mall website 300. The extracted current price or lowest price of the particular item can be adopted as the starting price, or a price discounted from or added to the extracted current price or lowest price by a predetermined percentage (or a predetermined value) can be adopted as the starting price.

The periodic target amount calculation unit 235 can use the target sales period and the total target sales amount to calculate the periodic target amount, i.e. the target amount of sales for each sales sub-period. The periodic target amount may be a value that is accumulated with the passage of each sales sub-period. Therefore, the periodic target amount allotted to the $N$-th sales sub-period can be the target amount of sales that should be reached by the end of the $N$-th sales sub-period.

The timer 240 may be operated by a control command of the control unit 260 when the configuration of the initial values described above is completed. The timer 240 can count the flow of time and generate a particular signal (e.g. price adjustment command signal) at a particular time point (e.g. the end or beginning of an $N$-th sales sub-period).

The computation unit 245 can calculate an adjustment price that should be adjusted for the $N$-th sales sub-period based on the sales index of the ($N$-1)-th sales sub-period according to a price adjustment command signal generated by the timer 240. The method by which the computation unit 245 may calculate the adjustment price that should be adjusted for the $N$-th sales sub-period will be described later on.

The price adjustment unit 250 can determine the sales price to be applied at the $N$-th sales sub-period by using the adjustment price calculated above and the sales price at the ($N$-1)-th sales sub-period.

The transmission unit 255 can transmit the sales price that is to be applied at the $N$-th sales sub-period to the sales server 100. Then, the sales server 100 can conduct sales with the received sales price applied as the sales price for the $N$-th sales sub-period.

The control unit 260 can provide overall control for the reception unit 210, display unit 215, storage unit 220, initial value configuration unit 225, initial value search engine 230, periodic target amount calculation unit 235, timer 240, computation unit 245, price adjustment unit 250, and transmission unit 255.

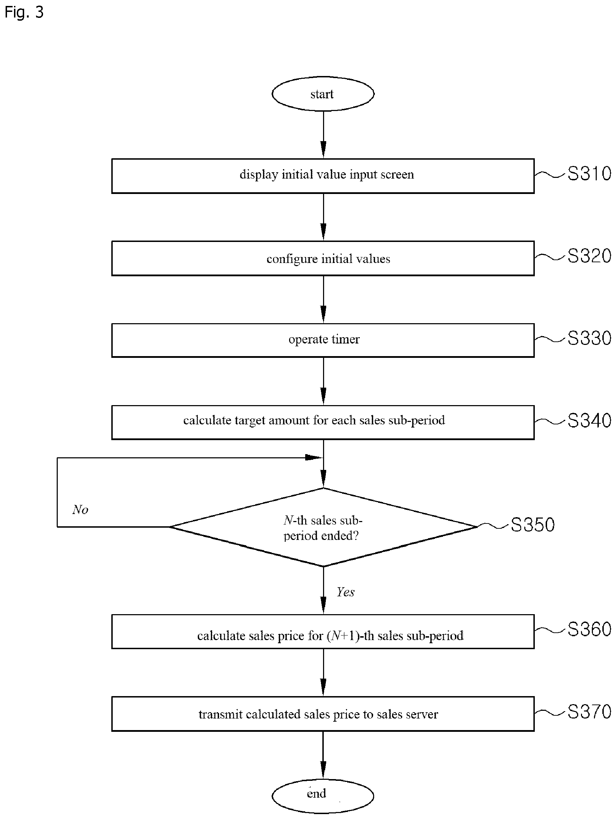

FIG. 3 is a flow diagram of a method for dynamically pricing an item associated with an embodiment of the present invention.

First, the display unit 215 can display an input screen for configuring the initial values (i.e. initial sales condition values) of a particular item that is to be sold at a dynamically determined price (operation S310).

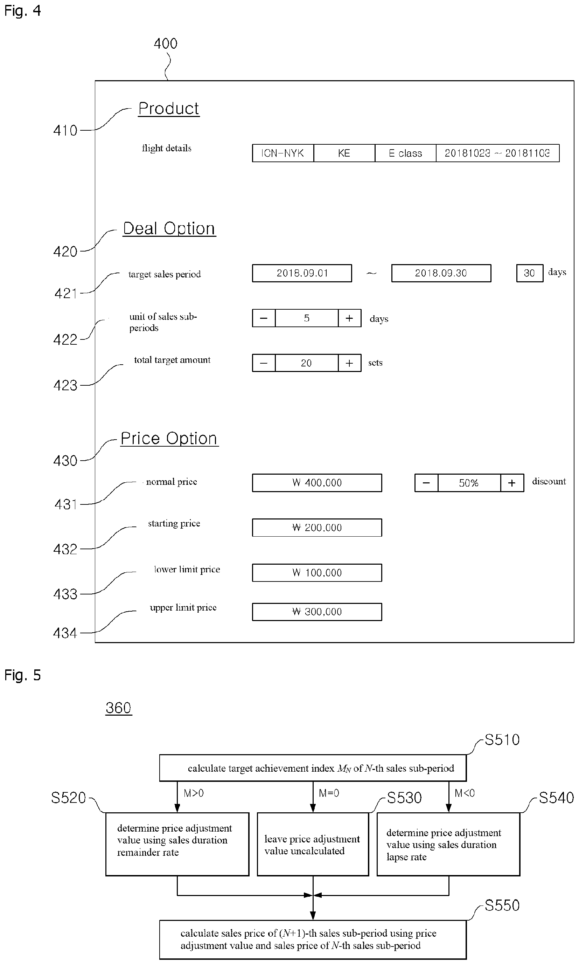

FIG. 4 illustrates an example of an input screen for configuring initial values in a method for dynamically pricing an item associated with an embodiment of the present invention.

As illustrated, the input screen 400 may show menus for configuring the item 410 that is to be sold, selecting sales options 420, and configuring price options 430. The sales item 410, sales options 420, and price options 430 can be determined via user input.

The item 410 that is to be sold can be selected via user input or can also be selected as a default option. The item that is to be sold with dynamic pricing can be an item having a fixed period of usage.

The user can determine the detailed options for the sales options 420 via user input. The detailed options for the sales options 420 can include the target sales period 421, the units of sales sub-periods 422, and the total target amount 423.

The target sales period 421 refers to the total sales period during which the selected item is to be sold at a dynamically determined price. The target sales period 421 can be configured, for example, by having the user input the time point at which sales will begin and the time point at which sales will end. The target sales period can be configured in units of hours, days, weeks, months, etc.

The target sales period 421 can be divided into a multiple number of sales sub-periods during which different sales prices may be applied. The units of sales sub-periods 422 refer to the durations of or intervals between sales sub-periods. The sales sub-periods can be configured in units of hours, days, weeks, months, etc. While the units of sales sub-periods 422 can be configured such that all sales sub-periods are of the same duration, it is also possible to input a different duration for each sales sub-period. A first sales sub-period may be configured as 3 days, while a second sales sub-period may be configured as 5 days (not shown). Also, a first sales sub-period may be a period $P_1$ for which a 0th adjustment price (= starting price) is applied as the sales price, a second sales sub-period may be a period $P_2$ for which a 1st adjustment price is applied as the sales price, and an $N$-th sales sub-period may be a period $P_n$ for which an ($N$-1)-th adjustment price is applied as the sales price. Here, $N$ is a natural number.

The total target amount 423 refers to the total number of items that are to be sold during the target sales period.

The user can determine the detailed options for the price options 430 via user input. The detailed options for the price options 430 can include the normal price 431, the starting price 432, the lower limit price 433, and the upper limit price 434.

The normal price 431 can have been already determined by the seller or can be extracted through the initial value search engine 230. For example, the initial value search engine 230 can search for and extract the current price or the lowest price for the particular item from a price comparison website or shopping mall website 300. The extracted current price or lowest price can be adopted as the normal price for the item.

When the normal price 431 is determined, the user can determine the starting price 432 by applying a discount rate.

The starting price 432 refers to the sales price at the time point when the dynamic sales of the selected item begins, the upper limit price 434 refers to the highest price that the sales price of the item can be dynamically changed to, and the lower limit price 433 refers to the lowest price that the sales price of the item can be dynamically changed to. The starting price 432, the lower limit price 433, and the upper limit price 434 can also be determined by user input. Also, according to an embodiment of the present invention, the upper limit price 434 and the lower limit price 433 can be determined automatically when the starting price 432 is inputted.

The initial value configuration unit 225 can configure the initial values of the particular item according to the user input provided through the input screen 400 (operation S320).

When the configuration of the initial values is complete, the timer 240 may operate for counting time (operation S330). Upon reaching a predetermined time point, the timer 240 can generate a particular signal. For example, the timer 240 can generate a price adjustment command signal and transmit the price adjustment command signal to the computation unit 245 at every time point of a sales sub-period ending.

When the configuration of the initial values is complete, the timer 240 can calculate the periodic target amount corresponding to each sales sub-period (operation S340). The periodic target amount calculation unit 235 can calculate the periodic target amount regarding the target amount of sale desired for each sales sub-period by using the target sales period and the total target sales amount. The periodic target amount may be a value that is accumulated with the passage of each sales sub-period. Therefore, the periodic target amount allotted to the $N$-th sales sub-period can be the target amount of sales that should be reached by the time point at which the $N$-th sales sub-period ends.

According to an embodiment of the present invention, when the initial values is configured, the periodic target amount can also be calculated by using a product of a base value, which may be allotted as a periodic target amount that is obtained as a proportion of the target sales amount configured as a part of the initial values according to the duration of the sales period that has passed, and a weight value, which may be mapped to the corresponding sales sub-period. This can be expressed as Equation 1 below.

## [Equation 1]

$$F_i - f_i * a_i$$

Here, $F_i$ is the periodic target amount at the $i$-th sales sub-period, $f_i$ is the base value (i.e. base target amount) at the $i$-th sales sub-period, and $a_i$ is the weight value mapped to the $i$-th sales sub-period. Also, $a$ is a value greater than 0 at the corresponding price adjustment time point. Here, $i$ is a natural number.

When the periodic target amount allotted for each sales sub-period is calculated, the computation unit 245 can check whether or not an $N$-th sales sub-period has ended and, after the $N$-th sales sub-period has ended but before the $(N+1)$-th sales sub-period begins, can calculate the sales price that is to be applied in the $(N+1)$-th sales sub-period (operations S350, S360).

Then, the transmission unit 255 can transmit the calculated sales price that is to be applied in the $(N+1)$-th sales sub-period to the sales server 100 before the time point at which the $(N+1)$-th sales sub-period begins (operation S370).

In the following, a more detailed description of operation S360 is provided.

The value $f_i$ in Equation 1 above can be expressed as Equation 2 below.

## [Equation 2]

$$f_i = E * \left(\frac{D_i}{A}\right)$$

Here, $E$ is the total target amount, and $D_i$ is a value representing the amount of time that has passed at the $i$-th sales sub-period, i.e. the amount of time that would have passed at the time point when the $i$-th sales sub-period ends. A is the target sales period.

For example, if the target sales amount $E$ configured as an initial value is 10 and the target sales period A is 10, and if the first sales sub-period ends at 3 days after the beginning of the sales period, then the time $D_i$ that has passed corresponding to the $i$-th sales sub-period would be 3, and the base value $f_i$ would be 3.

As described above, while it is possible to calculate the periodic target amount $F_i$ with only the base value, it is also possible to consider a weight $a_i$ related to a property of the item at a particular sales period.

When the periodic target amount is determined, the computation unit 245 can calculate and determine a price adjustment value before the beginning of each configured sales sub-period.

First, the computation unit 245 can check whether or not an $N$-th sales sub-period has ended and, at a time point after the end of the $N$-th sales sub-period and before the beginning of the ($N$+1)-th sales sub-period, can calculate a target achievement index $M_N$ that was achieved during the $N$-th sales sub-period (operation S510). The target achievement index $M_N$ is the target achievement index achieved during the $N$-th sales sub-period. The target achievement index $M_N$ can be calculated by using the cumulative net sales amount at the $N$-th sales sub-period and the periodic cumulative target amount allotted to the $N$-th sales sub-period. This can be expressed as Equation 3 below.

[Equation 3]

$$M_1 - \frac{G_i}{F_i} - 1$$

Here, $M_i$ is the target achievement index at the $i$-th sales sub-period, $G_i$ is the cumulative net sales amount up to the end of the $i$-th sales sub-period, and $F_i$ is the periodic target amount of the $i$-th sales sub-period.

In this case, the computation unit 245 can determine an adjusted price according to the value of $M_i$ by using another price adjustment variable. The price adjustment variable can include a time factor and a price adjustment amount. The time factor and price adjustment value will be described later on in further detail.

Values of $M_i > 0$ represent cases in which sales exceeded the periodic target amount in the $i$-th sales sub-period, values of $M_i < 0$ represent cases in which sales fell below the periodic target amount in the $i$-th sales sub-period, and a value of $M_i = 0$ represent cases in which the sales record is the same as the periodic target amount in the $i$-th sales sub-period.

The computation unit 245 can determine the price adjustment value by using a sales duration remainder rate as the time factor if $M_i > 0$ (operation S520) and can determine the price adjustment value by using a sales duration lapse rate as the time factor if $M_i < 0$ (operation S540). Also, the computation unit 245 may not necessarily calculate a price adjustment value if $M_i = 0$ (operation S530).

The sales duration lapse rate is a rate representing how much time has passed at the end of the corresponding sales sub-period with respect to the target sales period. This can be expressed as Equation 4 below.

[Equation 4]

$$N_i - D_i / A$$

Here, $N_i$ is the sales duration lapse rate of the $i$-th sales sub-period, $D_i$ is the amount of time that has lapsed at the end of the $i$-th sales sub-period, and $A$ is the target sales period.

For example, if the target sales period A is 10 days and the end point of the $i$-th sales sub-period is 3 days from the beginning of the target sales period, then the amount of time that has lapsed $D_i$ at the end point of the $i$-th sales sub-period would be 3, and the sales duration lapse rate $N_i$ would be 3/10.

Also, the sales duration remainder rate is a rate representing how much time is left until the end of the sales period at the end of the $i$-th sales sub-period (or the beginning of the ($i$+1)-th sales sub-period). This can be expressed as Equation 5.

## [Equation 5]

$$T_i = 1 - D_i/A$$

Here, $T_i$ represents the sales duration remainder rate at the $i$-th sales sub-period. Therefore, sales duration remainder rate ($T_i$) = 1 - sales duration lapse rate ($N_i$).

The computation unit 245 can calculate the price adjustment rate for the $i$-th sales sub-period differently for cases where $M_i < 0$ and cases where $M_i > 0$. The price adjustment rate of the $i$-th sales sub-period is a rate representing how much the sales price of the ($i$-1)-th sales sub-period should be adjusted between the upper limit price and the lower limit price. In cases where the price adjustment rate $M_i < 0$, the calculation can be based on the sales duration lapse rate $N_i$, and in cases where $M_i > 0$, the calculation can be based on the sales duration remainder rate $T_i$. The price adjustment rate $P_i$ for the $i$-th sales sub-period can be expressed as Equation 6 below.

## [Equation 6]

$$P_i = \begin{cases} M_i * T_i & if\ M_i > 0 \\ M_i * N_i & if\ M_i < 0 \end{cases}$$

Here, $P_i$ represents the price adjustment rate of the $i$-th sales sub-period.

By thus calculating the price adjustment rate with the time factor applied differently for cases in which $M_i < 0$ and cases in which $M_i > 0$, the adjustment price can be calculated more reasonably.

When the price adjustment rate is determined, the computation unit 245 can calculate the adjustment price value. The adjustment price value can be calculated by using a price adjustment amount. The price adjustment amount can be expressed as Equation 7 below, and the adjustment price value can be expressed as Equation 8 below.

## [Equation 7]

$$Q_i = \begin{cases} I - sales\ price\ of\ (i-1)th\ sales\ sub-period & if\ M_i > 0 \\ sales\ price\ of\ (i-1)th\ sales\ sub-period - J & if\ M_i < 0 \end{cases}$$

Here, $Q_i$ represents the price adjustment amount for the $i$-th sales sub-period, $I$ represents the upper limit price, and J represents the lower limit price.

## [Equation 8]

$$R_i = P_i * Q_i$$

Here, $R_i$ represents the price adjustment value of the $i$-th sales sub-period.

When the price adjustment value $R_i$ for the $i$-th sales sub-period is determined, the price adjustment unit 250 can determine the sales price for the ($i$+1)-th sales sub-period by using the sales price of the $i$-th sales sub-period and the determined price adjustment value $R_i$ (operation S540). The sales price for the ($i$+1)-th sales sub-period can then be expressed as Equation 9 below.

## [Equation 9]

$$S_{i+1} = S_i + R_i$$

Here, $S_{i+1}$ is the sales price of the item for the ($i$+1)-th sales sub-period.

Then, the transmission unit 255 can transmit the sales price of the item for the ($i$+1)-th sales sub-period to the sales server 100 before the time point at which the ($i$+1)-th sales sub-period begins (operation S390).

According to an embodiment of the present invention, the sales of the particular item can be ended, even before the end of the target sales period, if the cumulative net sales amount $G_i$ = target sales amount. If the cumulative net sales amount $G_i$ = target sales amount as above, or if the end of the target sales period has been reached, the control unit 260 can end the operation of the timer 240.

According to an embodiment of the present invention, the sales duration lapse rate or the sales duration remainder rate for calculating the price adjustment value $R_i$ can use the value computed by Equation 4 or Equation 5 as is but can also use values obtained by multiplying or adding a particular weight value to the value calculated by Equation 4 or Equation 5.

As described above, a method and device for dynamically pricing an item according to an embodiment of the present invention can determine the price of an item dynamically in consideration of both the periodic target amount at a particular time point and the sales index at the particular time point, thereby incorporating the current state of consumer demands as well as reducing inventory levels of the sales product.

An embodiment of the present invention can dynamically determine the price of an item by considering both the initially configured values and the sales index at a particular time point for each sales sub-period and can thereby provide a price that is reasonable from the perspectives of both the consumer and the seller.

According to an embodiment of the invention, the effort and cost associated with an administrator determining the sales price of each item can be reduced.

A method for dynamically pricing an item as described above can be implemented in the form of program instructions that may be performed using various computer means and can be recorded in a computer-readable medium. Here, such a computer-readable medium can include program instructions, data files, data structures, etc., alone or in combination. The program instructions recorded on the medium can be designed and configured specifically for the embodiments or can be a type of medium known to and used by the skilled person in the field of computer software.

A computer-readable medium may include a hardware device that is specially configured to store and execute program instructions. Some examples may include magnetic media such as hard disks, floppy disks, and magnetic tapes, optical media such as CD-ROM's and DVD's, magneto-optical media such as floptical disks, and hardware devices such as ROM, RAM, flash memory, SSD's (solid-state drives), etc., configured specially for storing and executing program instructions.

The recorded medium can also be a transmission medium, such as rays, metal lines, waveguides, etc., which may include carrier waves that transfer signals for specifying program instructions, data structures, etc.

Examples of the program of instructions may include not only machine language codes produced by a compiler but also high-level language codes that can be executed by a computer through the use of an interpreter, etc. The hardware mentioned above can be made to operate as one or more software modules that perform the actions of the embodiments, and vice versa.

A self-location estimation method for a moveable object and the moveable object using the method, disclosed above, are not limited in composition and method to the embodiments described above. Rather, elements of different embodiments can be wholly or partially combined in a selective manner to provide numerous variations.

**Claims**

1. A method for dynamically pricing an item, the method performed by a pricing device connected to a computer network to dynamically determine a price of the item, the method comprising:

   displaying an initial value input screen for inputting initial values associated with selling a particular item at a dynamically determined price;
   configuring a target sales period, a target sales amount, and a starting price for the particular item by way of the initial value input screen, the target sales period divided into a plurality of sales sub-periods;
   configuring a unit of each sales sub-period;
   calculating periodic target amounts of the particular item by using the target sales period and the target sales amount, the periodic target amounts mapped respectively to the sales sub-periods;
   operating a timer for counting time;
   calculating a target achievement index ($M_i$) achieved in an $i$-th sales sub-period based on a price adjustment command signal generated by the timer, the target achievement index ($M_i$) calculated after an end of the $i$-th sales sub-period and before a beginning of an ($i$+1)-th sales sub-period by using the periodic target amount mapped to the $i$-th sales sub-period and a cumulative net sales amount, wherein $i$ is a natural number;
   determining an adjustment price value ($R_i$) for the $i$-th sales sub-period by using the target achievement index

$(M_i)$; and

determining a sales price of the $(i+1)$-th sales sub-period by using a sales price of the $i$-th sales sub-period and the determined adjustment price value for the $i$-th sales sub-period.

2.  The method for dynamically pricing an item according to claim 1, wherein the target achievement index $(M_i)$ achieved in the $i$-th sales sub-period is determined by Equation 1 below:

[Equation 1]

$$M_i = \frac{G_i}{F_i} - 1$$

wherein $M_i$ is the target achievement index at the $i$-th sales sub-period, $G_i$ is a cumulative net sales amount up to the end of the $i$-th sales sub-period, and $F_i$ is the periodic target amount of the $i$-th sales sub-period.

3.  The method for dynamically pricing an item according to claim 2, wherein the determining of the adjustment price value $(R_i)$ for the $i$-th sales sub-period is performed further using a price adjustment amount $(Q_i)$ of the $i$-th sales sub-period,
    and wherein the price adjustment amount $(Q_i)$ is a value obtained by subtracting a sales price of an $(i-1)$-th sales sub-period from a configured upper limit price if $M_i > 0$ and is a value obtained by subtracting a configured lower limit price from the sales price of the $(i-1)$-th sales sub-period if $M_i < 0$.

4.  The method for dynamically pricing an item according to claim 2, wherein the determining of the adjustment price value $(R_i)$ is performed further using a time factor of the $i$-th sales sub-period.

5.  The method for dynamically pricing an item according to claim 4, wherein the time factor includes a sales duration lapse rate (M) and a sales duration remainder rate ($T_i$ =1 - sales duration lapse rate $(N_i)$) of the $i$-th sales sub-period, and wherein the sales duration remainder rate $(T_i)$ is used as the time factor if $M_i > 0$, and the sales duration lapse rate (M) is used as the time factor if $M_i < 0$.

6.  The method for dynamically pricing an item according to claim 2, wherein the periodic target amount is calculated by using a base value and a weight value, the base value allotted as a periodic target amount obtained as a proportion of the target sales amount configured as a part of the initial values according to a duration of the sales period that has passed.

7.  A device for dynamically pricing an item, the device connected to a computer network to dynamically determine a price of the item, the device comprising:

    a display unit that displays an initial value input screen for inputting initial values associated with selling a particular item at a dynamically determined price;
    an initial value configuration unit that configures a target sales period, a target sales amount, a starting price, and a unit of sales sub-periods for the particular item by way of the initial value input screen, the target sales period divided into a plurality of sales sub-periods;
    a periodic target amount calculation unit that calculates periodic target amounts of the particular item by using the target sales period and the target sales amount, the periodic target amounts mapped respectively to the sales sub-periods;
    a timer that counts time and generates a particular signal at a predetermined time point;
    a computation unit that calculates a target achievement index $(M_i)$ achieved in an $i$-th sales sub-period based on a price adjustment command signal generated by the timer and determines an adjustment price value $(R_i)$ for the $i$-th sales sub-period by using the target achievement index $(M_i)$, the target achievement index $(M_i)$ calculated after an end of the $i$-th sales sub-period and before a beginning of an $(i+1)$-th sales sub-period by using the periodic target amount mapped to the $i$-th sales sub-period and a cumulative net sales amount, wherein $i$ is a natural number;
    a price adjustment unit that determines a sales price of the $(i+1)$-th sales sub-period by using a sales price of the $i$-th sales sub-period and the determined adjustment price value for the $i$-th sales sub-period; and
    a control unit that controls the display unit, the initial value configuration unit, the periodic target amount calculation unit, the computation unit, and the price adjustment unit.

8. The device for dynamically pricing an item according to claim 7, wherein the target achievement index ($M_i$) achieved in the *i*-th sales sub-period is determined by Equation 1 below:

$$[\text{Equation 1}]$$

$$M_i - \frac{G_i}{F_i} - 1$$

wherein $M_i$ is the target achievement index at the *i*-th sales sub-period, $G_i$ is a cumulative net sales amount up to the end of the *i*-th sales sub-period, and $F_i$ is the periodic target amount of the *i*-th sales sub-period.

9. The device for dynamically pricing an item according to claim 8, wherein the computation unit determines the adjustment price value ($R_i$) for the *i*-th sales sub-period by further using a price adjustment amount ($Q_i$)) of the *i*-th sales sub-period,
and wherein the price adjustment amount ($Q_i$) is a value obtained by subtracting a sales price of an (*i*-1)-th sales sub-period from a configured upper limit price if $M_i > 0$ and is a value obtained by subtracting a configured lower limit price from the sales price of the (*i*-1)-th sales sub-period if $M_i < 0$.

10. The device for dynamically pricing an item according to claim 8, wherein the computation unit determines the adjustment price value ($R_i$) by further using a time factor of the *i*-th sales sub-period.

11. The device for dynamically pricing an item according to claim 10, wherein the time factor includes a sales duration lapse rate (M) and a sales duration remainder rate ($T_i$ =1 - sales duration lapse rate ($N_i$)) of the *i*-th sales sub-period, and wherein the sales duration remainder rate ($T_i$) is used as the time factor if $M_i > 0$, and the sales duration lapse rate (M) is used as the time factor if $M_i < 0$.

12. The device for dynamically pricing an item according to claim 8, wherein the periodic target amount is calculated by using a base value and a weight value, the base value allotted as a periodic target amount obtained as a proportion of the target sales amount configured as a part of the initial values according to a duration of the sales period that has passed.

Fig. 1

price comparison /
shopping mall website ~300

sales server ~100

Internet

network

pricing device ~200

Fig. 2

200

260

235~ periodic target
amount calculation

reception unit ~210

240~ timer

display unit ~215

245~ computation unit

control unit

storage unit ~220

250~ price adjustment unit

initial value
configuration unit ~225

255~ transmission unit

initial value
search engine ~230

Fig. 3

```
                    ( start )
                        |
                        v
    +-----------------------------------------+
    |      display initial value input screen |~S310
    +-----------------------------------------+
                        |
                        v
    +-----------------------------------------+
    |            configure initial values     |~S320
    +-----------------------------------------+
                        |
                        v
    +-----------------------------------------+
    |               operate timer             |~S330
    +-----------------------------------------+
                        |
                        v
    +-----------------------------------------+
    |   calculate target amount for each      |~S340
    |            sales sub-period             |
    +-----------------------------------------+
                        |
        +-------------->|
        |               v
        |            <  N-th sales sub-        >~S350
      No +----------<   period ended?          >
                        |
                       Yes
                        v
    +-----------------------------------------+
    | calculate sales price for (N+1)-th      |~S360
    |           sales sub-period              |
    +-----------------------------------------+
                        |
                        v
    +-----------------------------------------+
    |  transmit calculated sales price to     |~S370
    |             sales server                |
    +-----------------------------------------+
                        |
                        v
                    ( end )
```

Fig. 4

400

```
Product
410

    flight details        | ICN-NYK | KE | E class | 20181023 ~ 20181103 |


Deal Option
420

421    target sales period      | 2018.09.01 |  ~  | 2018.09.30 |    | 30 | days

422    unit of sales sub-       | − | 5 | + | days
       periods

423    total target amount      | − | 20 | + | sets


Price Option
430

431    normal price      | ₩ 400,000 |            | − | 50% | + | discount

432    starting price    | ₩ 200,000 |

433    lower limit price | ₩ 100,000 |

434    upper limit price | ₩ 300,000 |
```

Fig. 5

<u>360</u>

S510
calculate target achievement index $M_N$ of $N$-th sales sub-period

M>0      M=0      M<0

S520
determine price adjustment value using sales duration remainder rate

S530
leave price adjustment value uncalculated

S540
determine price adjustment value using sales duration lapse rate

S550
calculate sales price of ($N$+1)-th sales sub-period using price adjustment value and sales price of $N$-th sales sub-period

## INTERNATIONAL SEARCH REPORT

| International application No. |
| --- |
| **PCT/KR2019/008863** |

**A. CLASSIFICATION OF SUBJECT MATTER**

*G06Q 30/02(2012.01)i*

According to International Patent Classification (IPC) or to both national classification and IPC

**B. FIELDS SEARCHED**

Minimum documentation searched (classification system followed by classification symbols)
G06Q 30/02; G06Q 10/02; G06Q 30/00; G06Q 30/06; G06Q 30/06; G06Q 50/00; G07G 1/01; G07G 1/12

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: item, price, plan, number of sales, period, adjustment

**C. DOCUMENTS CONSIDERED TO BE RELEVANT**

| Category* | Citation of document, with indication, where appropriate, of the relevant passages | Relevant to claim No. |
| --- | --- | --- |
| Y | JP 5418326 B2 (FUJITSU LTD.) 19 February 2014<br>See paragraphs [0012], [0036]-[0041], [0057]-[0065], claims 4-5 and figures 5, 7-10. | 1-12 |
| Y | JP 2012-053583 A (TOSHIBA TEC CORP.) 15 March 2012<br>See paragraphs [0030]-[0032], [0041]-[0044], claim 1 and figures 9-10. | 1-12 |
| A | KR 10-2000-0036645 A (AR VISION INC.) 05 July 2000<br>See pages 3, 6-7, claims 7-8 and figures 6-7, 11a-11d. | 1-12 |
| A | KR 10-2012-0019345 A (UBILAB INC.) 06 March 2012<br>See claims 1-2 and figures 1-2, 4. | 1-12 |
| A | JP 2010-117749 A (WAVE K.K.) 27 May 2010<br>See claims 1-2, 8-10 and figures 13-26. | 1-12 |
| DA | KR 10-2009-0013742 A (WIRETOWIRE COMMUNICATION) 05 February 2009<br>See claims 1-3, 6-9 and figures 12-14. | 1-12 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25 OCTOBER 2019 (25.10.2019) | **25 OCTOBER 2019 (25.10.2019)** |

| Name and mailing address of the ISA/KR<br>Korean Intellectual Property Office<br>Government Complex Daejeon Building 4, 189, Cheongsa-ro, Seo-gu, Daejeon, 35208, Republic of Korea<br>Facsimile No. +82-42-481-8578 | Authorized officer<br><br>Telephone No. |
| --- | --- |

Form PCT/ISA/210 (second sheet) (January 2015)

**INTERNATIONAL SEARCH REPORT**
Information on patent family members

International application No.

**PCT/KR2019/008863**

| Patent document cited in search report | Publication date | Patent family member | Publication date |
|---|---|---|---|
| JP 5418326 B2 | 19/02/2014 | JP 2011-192186 A | 29/09/2011 |
| JP 2012-053583 A | 15/03/2012 | JP 05134661 B2 | 30/01/2013 |
| KR 10-2000-0036645 A | 05/07/2000 | None | |
| KR 10-2012-0019345 A | 06/03/2012 | None | |
| JP 2010-117749 A | 27/05/2010 | JP 05221289 B2 | 26/06/2013 |
| KR 10-2009-0013742 A | 05/02/2009 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2019008863 W
- KR 1020180083763
- KR 1020090013742